# EUROPÄISCHE PATENTANMELDUNG

(11) **EP 1 227 066 A2**
(43) Veröffentlichungstag der Anmeldung: **31.07.2002**
(21) Anmeldenummer: 02000024.6
(22) Anmeldetag: 04.01.2002
(51) Int. Cl.: C02F 3/30, C02F 3/06

(54) **Verfahren und Anlage zur biologischen Reinigung kommunaler, industrieller oder gewerblicher Abwässer**

(30) Priorität: 05.01.2001 AT 82001 U
(71) Anmelder: Adler, Herwig, 3433 Königstetten (AT)
(72) Erfinder: Adler, Herwig, 3433 Königstetten (AT)
(74) Vertreter: Kliment, Peter

(57) **Zusammenfassung**

Verfahren zur biologischen Reinigung kommunaler, industrieller oder gewerblicher Abwässer, das eine mechanische Vorreinigung, gegebenenfalls eine Vorklärung, gegebenenfalls eine biologische Phosphatelimination, ein Belebungsverfahren, gegebenenfalls eine Nachklärung sowie eine Abwasserbehandlung mithilfe eines mit sessilen Mikroorganismen besiedelten Biofiltermediums umfasst, wobei der Abbau organischer Substanzen, Nitrifikation, Filterung von festen Stoffen und gegebenenfalls der Phosphatabbau im wesentlichen in dem mit sessilen Mikroorganismen besiedelten Biofiltermedium (2) stattfinden und Denitrifikation im wesentlichen im vorwiegend anoxisch durchgeführten Belebungsverfahren stattfindet, indem nach dem Durchlaufen des Biofiltermediums eine vorzugsweise belastungsorientierte Rezirkulation des Wassers in jene Verfahrensschritte erfolgt, die dem vorwiegend anoxisch durchgeführten Belebungsverfahren vorangehen. Weiters wird eine Anlage vorgeschlagen, die dieses Verfahren realisiert und eine Biofiltrationsanlage (16), Rückführungsleitungen (10, 17), Reinwasserbecken (6) sowie Spülabwasserbecken (5) umfasst.

## Beschreibung

Gegenstand der Erfindung ist ein Verfahren gemäß dem Oberbegriff von Anspruch 1 sowie eine Anlage zur Realisierung des erfindungsgemäßen Verfahrens.

Die Erfindung bezieht sich dabei auf Anlagen zur biologischen Abwasserreinigung, die im wesentlichen aus folgenden Vefahrensschritten bzw. Komponenten, für die wiederum viele mögliche Ausführungsformen existieren, bestehen:
- Grobreinigung des Abwassers mit Rechen, Sieb und Sandfang
- Vorklärbecken zur Sedimentation leicht absetzbarer Stoffe (optional)
- Anlage zur biologischen Phosphatelimination (optional)
- Belebungsverfahren in Form von Durchlaufanlagen (mit getrennter Belebungsstufe und Nachklärbecken), Abwasserteiche oder Aufstauanlagen ("Sequencing Batch Reactor", SBR)
- Diverse periphere Anlagen etwa zur Schlammbehandlung, Trocknung oder Biogasverwertung

Die Abwasserreinigung vollzieht sich dabei hauptsächlich im Rahmen des Belebungsverfahrens. Hier wird für eine ausreichende Belüftung des Abwassers gesorgt, wodurch sich schleimige, makroskopisch erkennbare Flocken entwickeln. Wenn die Belüftung eingestellt wird und das Wasser somit zur Ruhe kommt, setzen sich diese Flocken als Bodenschlamm ab. Es zeigt sich, dass diese Flocken mit Bakterien und Protozoen besiedelt sind ("Belebtschlamm"), die organische Stoffe in mineralische Abbauprodukte umwandeln, dabei aber auch Biomasse aufbauen. Durch spezielle Bakterienarten ("Nitrifikanten") erfolgt weiters die Umwandlung von Ammonium zu Nitrit (z.B. durch *Nitrosomonas* spec.) und weiter zu Nitrat (z.B. durch Nitrobacter spec.). Diese Stoffumwandlungsprozesse werden als Nitrifikation bezeichnet und bedürfen der Anwesenheit von Sauerstoff. Stickstoff in Form von Ammonium wird im weiteren als NH₄-N bezeichnet. Die Umwandlung von Nitrat und Nitrit in atmosphärischen Stickstoff ("Denitrifikation") wird von anderen Mikroorganismen bewerkstelligt (den "Denitrifikanten"), die für diesen Metabolismus ein sauerstoffarmes Milieu bevorzugen. Stickstoff in Form von Nitrit oder Nitrat wird im folgenden als NOₓ-N bezeichnet. Im Belebungsbecken wird für die gleichzeitige Anwesenheit beider Populationen und der damit assoziierten Biozönosen gesorgt, etwa indem ein Teil des Beckens belüftet und ein anderer Teil lediglich vorsichtig gerührt wird.

Kohlenstoffabbau, insbesondere die Reduktion von BSB₅ (Biologischer Sauerstoffbedarf) und CSB₅ (Chemischer Sauerstoffbedarf) , Nitrifikation, Denitrifikation sowie, bei fehlender separater Anlage zur Phosphatelimination, die biologische Phosphat-Elimination vollziehen sich hauptsächlich während des Belebungsverfahrens. Im Nachklärbecken wird schließlich die in den Belebungsbecken gebildete Biomasse sowie andere absetzbare Stoffe vom gereinigten Abwasser getrennt, sodass ein schwebstoffarmer Abfluss erzeugt wird.

Die zunehmenden Anforderungen an die Abwasserreinigung, sowohl hinsichtlich der Menge des zu behandelnden Abwassers als auch der Grenzwerte für Inhaltsstoffe des geklärten Abwassers, führen zu der Notwendigkeit von Erweiterungen oder Modernisierungen bestehender Kläranlagen. Die üblichen biologischen Reinigungssysteme zur weitgehenden Reduzierung der Stickstoff- und Phosphorverbindungen sowie einer weitgehenden Elimination von organischen Substanzen benötigen für den biologischen Teil allerdings viel Raum und Fläche, was insbesondere bei einer Kapazitätserweiterung bestehender Anlagen großen zusätzlichen Platzbedarf und aufwendige, teure Umbauarbeiten erfordert. Es müssen sehr hohe Investitionen in neue, zusätzliche Belebungs- und Nachklärbecken sowie zusätzliche Bauwerke samt maschineller- und messregeltechnischer Einrichtungen, getätigt werden. Dies immer unter der Voraussetzung, dass genügend Platz für zusätzliche Bauwerke vorhanden ist.

Ziel der Erfindung ist es, ein neues Verfahren zur biologischen Abwasserreinigung vorzuschlagen, das in der bautechnischen Umsetzung geringeren Platzbedarf als übliche Anlagen nach sich zieht. Insbesondere ist dieses Verfahren dazu geeignet, Kapazitätserweiterungen bestehender Anlagen für die biologische Abwasserreinigung ohne großen baulichen Aufwand und somit vergleichsweise preiswert zu ermöglichen und dabei auch gesteigerten Anforderungen an die Reinigungsleistung gerecht zu werden. Das soll unter geringem Platzbedarf für zusätzliche bauliche Erweiterungen und unter Beibehaltung und Weiterverwendung aller bestehenden Anlagen erfolgen.

Erfindungsgemäß wird das durch ein Verfahren gemäß Anspruch 1 für neue Anlagen und Anspruch 2 für bestehende Anlagen erreicht. Es ist dabei vorgesehen, bei neuen Anlagen eine Biofiltrationsanlage den üblichen Verfahrensschritten anzuschließen und sie wie im folgenden beschrieben zu verwenden, oder eine Biofiltrationsanlage bereits bestehenden Becken hinzuzufügen. Wie noch genauer beschrieben werden wird, wird die Biofiltrationsanlage vorzugsweise mit Prozessluftzugabe betrieben, sodass durch das sauerstoffhaltige Milieu Nitrifikation begünstigt wird, nicht jedoch die Denitrifikation. Anspruch 1 sowie Anspruch 2 sehen daher weiters die Rezirkulation von Reinwasser aus der Biofiltrationsanlage in vorgeordnete Reinigungsstufen vor.

Das erfindungsgemäße Verfahren kann somit in neuen Anlagen oder in bereits bestehenden Anlagen realisiert werden. Im folgenden wird die Beschreibung auf die Realisierung des Verfahrens in bereits bestehenden und in Betrieb befindlichen Anlagen beschränkt. Es wird daraus aber unmittelbar ersichtlich sein, wie der Neubau einer Anlage auf Basis des erfindungsgemäßen Verfahrens zu erfolgen hätte.

Wird die Biofiltrationsanlage einer bestehenden Anlage hinzugefügt, so ist etwa vorgesehen, Reinwasser aus der Biofiltrationsanlage in die vor der Hinzufügung der Biofiltrationsanlage als Belebungsbecken betriebenen Reinigungsstufen zu rezirkulieren. Um Denitrifikation zu ermöglichen, muss dieses Becken nun anoxisch gehalten werden, was durch entsprechende Belüftungsregelung bzw. durch Vermischung erreicht werden kann. Somit wird auch NOₓ-N entfernt.

Es ist somit vorgesehen, dass die Biofiltrationsanlage den Hauptanteil der Reduktion von BSB₅, CSB₅, NH4-N, Feststoffen sowie, falls keine separaten Einrichtungen dafür vorgesehen sind, Phosphor-Verbindungen übernimmt, anstatt der etwa vor einer Kapazitätserweiterung dafür vorgesehenen Belebungsbecken. Die Reduktion von NOₓ-N erfolgt im Rahmen der Denitrifikation im neuen, anoxischen Verfahrensschritt.

DE 196 45 311 A1 und WO 98/19969 A2 offenbaren Abwasserreinigungsverfahren, bei dem die Reinigung des Abwassers sowohl hinsichtlich des Abbaus organischer Substanzen, der Nitrifikation, der Filterung von festen Stoffen und dem Phosphatabbau als auch der Denitrifikation ausschließlich in der Biofiltrationsanlage abläuft. Die Steuerung von Nitrifikation und Denitrifikation des Abwassers innerhalb der Biofiltrationsanlage wird über eine kontrollierte Zufuhr von Prozessluft erreicht. Die vorgeordneten Becken stellen lediglich eine mechanische Vorreinigung über Siebanlagen sowie eine Grobreinigung über Auftrieb bzw. Sedimentation zur Abtrennung von Schwimmstoffen (z.B. Pflanzenteilen) und Sinkstoffen (z.B. Sand) dar. Bei konzentrierten Rohabwässern stellen sie überhaupt nur Vorratstanks für Rohwasser dar. Die Verwendung von Belebungsbecken, wie sie in der gegenständlichen Anmeldung verwendet werden, wird in diesen Schriftstücken explizit ausgeschlossen.

Im Gegensatz dazu wird im erfindungsgemäßen Verfahren die Reinigung des Abwassers lediglich hinsichtlich des Abbaus organischer Substanzen, der Nitrifikation, der Filterung von festen Stoffen und gegebenenfalls dem Phosphatabbau in der Biofiltrationsanlage vorgenommen, während die Denitrifikation des Abwassers im vorwiegend anoxisch betriebenen Belebungsverfahren stattfindet. Dazu wird das Abwasser nach dem Durchlaufen des Biofiltermediums vorzugsweise belastungsorientiert in die vorgeschalteten Belebungsbecken rezirkuliert (siehe Anspruch 1 der gegenständlichen Anmeldung).

Bei der in DE 196 45 311 A1 erwähnten "Rezirkulation" des Abwassers (die überdies nur bei konzentrierten Rohabwässern vorgenommen wird) handelt es sich hingegen lediglich um eine Umwälzung des Abwassers in der Biofiltrationsanlage, in dem Abwasser aus einer Ablaufleitung der Biofiltrationsanlage über eine Rückführleitung wieder in die Zuleitung der Biofiltrationsanlage gepumpt wird. Es handelt sich dabei lediglich darum, das Rohabwasser öfter durch das Biofiltermedium laufen zu lassen, falls ein einzelner Durchgang nicht die erforderliche Reinigungsleistung erbringt. Ist das Abwasser nach mehrmaligem Durchlaufen der Biofiltrationsanlage hinreichend gereinigt, wird es abgeführt. Es erfolgt jedoch keine Rezirkulation in vorangegangene Verfahrensschritte, insbesondere keine Rezirkulation in vorangegangene Belebungsverfahren, weil letztere in DE 196 45 311 A1 auch nicht vorkommen.

Ansprüche 4 bis 9 der gegenständlichen Erfindung beschreiben eine Anlage, die zur Realisierung des erfindungsgemäßen Verfahrens geeignet ist.

Das erfindungsgemäße Verfahren sowie die zu deren Realisierung geeignete Anlage werden nun anhand beigelegter Zeichnungen für den Fall der Erweiterung einer bestehenden Anlage näher beschrieben. Dabei zeigen
- Figur 1 den schematischen Aufbau eines möglichen konstruktiven Ausführungsbeispieles einer Biofiltrationsanlage
- Und Figur 2 ein Flussdiagramm einer bestehenden Anlage (durchgezogene Linien), die mit erfindungsgemäßen Maßnahmen erweitert wird (unterbrochene Linien).

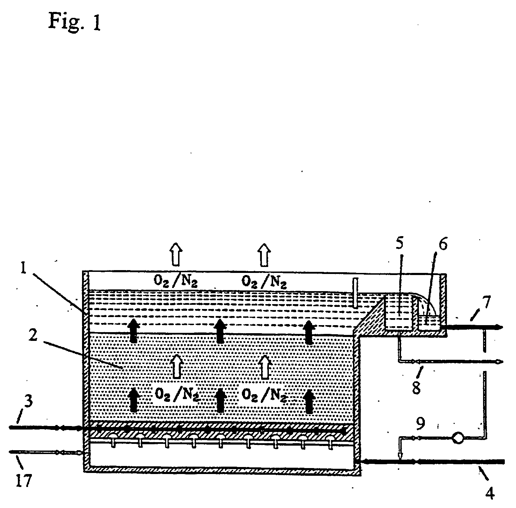

Biofiltrationsanlagen sind kompakte Reaktoren, in denen biologische Abwasserreinigung, Zurückhaltung der durch den Reinigungsprozess gebildeten Biomasse und Filtration der mit dem Rohabwasser zugeführten Feststoffe erfolgt. Sie finden unterschiedliche Anwendungen als selbständige Einheiten, sind teilweise auch in neu errichteten Anlagen vorgesehen und werden in Form zweistufiger Anlagen (Nitrifikation/Denitrifikation) auch in bestehende Anlagen, vor allem zur Denitrifikation, eingefügt. Es gibt abwärts und aufwärts durchströmte Systeme, wobei aufwärts durchströmte Systeme eine größere Verbreitung gefunden haben. Bei diesen Systemen erfolgt die Passage der Prozessluft (oder einer Kohlenstoffquelle) oder der Austrag des entstehenden Stickstoffs im Gleichstrom mit dem Abwasser (Fig. 1). Grundlage des Biofiltrationsverfahrens ist ein gefüllter Festbettreaktor 1, in dem sich Filtermaterial 2 mit poröser Oberfläche (z.B. Blähton) befindet. An diesem Filtermaterial lagern sich sessile Mikroorganismen an, die im Rahmen ihres Stoffwechsels Wasserinhaltsstoffe eliminieren. Erfindungsgemäß wird vorzugsweise mit Zuführung von Prozessluft 3 gearbeitet, sodass besonders jene Mikroorganismen selektiert werden, die unter sauerstoffhaltigen Bedingungen existieren können. Kohlenstoffabbau und Nitrifikation werden dadurch begünstigt. Ohne Prozesslufteintrag werden Mikroorganismen mit anoxischem Wachstum begünstigt, was Denitrifikation von Abwasser 4 nach sich zieht. Nach Passage des Filtermediums wird das Wasser in einem Spülabwasserbecken 5 gesammelt, dessen Überlauf in ein Reinwasserbecken 6 gelangt. Der durch den Aufbau von Biomasse anfallende Überschussschlamm wird durch gezielte periodische Rückspülung des Filtermediums 2 mit Reinwasser 7 in das Spülabwasserbecken 5 über eine Spülwasserzufuhr 9 geleitet. Diese Rückspülung, die das Filtermaterial reinigt, wird vorzugsweise alle 24-36 Stunden, im allgemeinen während der Nachtstunden, durchgeführt und kann auch unter Einbeziehung von Spülluft 17 erfolgen. Die im erfindungsgemäßen Verfahren verwendeten Biofiltrationsanlagen weisen ferner einen Ablauf aus dem Spülabwasserbecken 5 auf, über den Spülabwasser 8 in vorgeordnete Anlagenabschnitte geleitet werden kann.

Biofiltrationsanlagen sind sehr variabel und können leicht in ihrer Dimensionierung sowie der Betriebsführung an unterschiedliche Anfordernisse angepasst werden. Sie weisen mehrere Vorzüge auf:
- Eine Trennung der Biozönose ist leicht möglich.
- Durch die höheren Biomassekonzentrationen sind kleinere Reaktionsvolumen und kürzere Reaktionszeiten im Vergleich zu klassischen Aufbereitungstechniken erforderlich.
- Es fällt kein Schwimmschlamm an.
- Es kann eine bevorzugte Ansiedlung von speziellen Aufwuchsmikroorganismen beobachtet werden, was zur verbesserten Reduzierung schwer abbaubarer Verbindungen führt.
- Hohes Schlammalter
- Geringer Flächenbedarf
- Einsetzbarkeit als Flockungsfilter mit gutem Feststoffrückhalt.

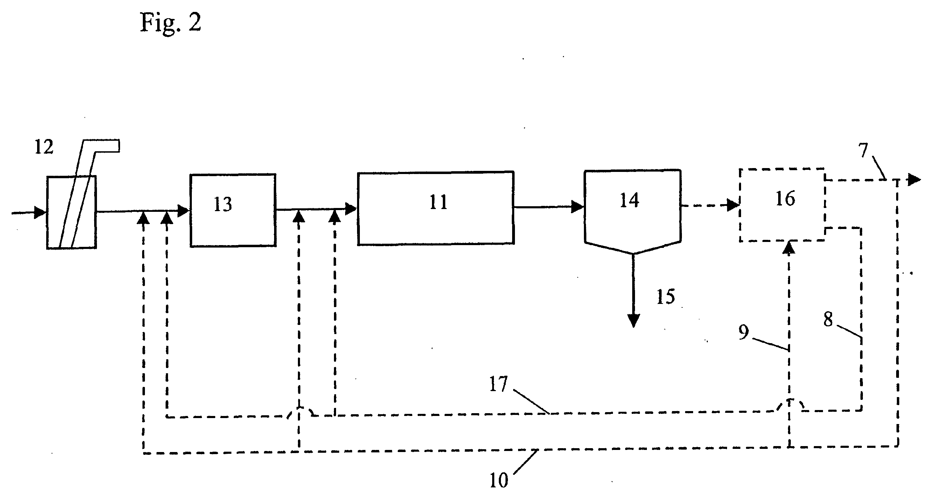

Da beim erfindungsgemäßen Verfahren die Biofiltrationsanlage 16 mit Prozessluftzufuhr betrieben wird, würde ohne weitere Maßnahmen das Reinwasser 7 unzulässig hohe Werte an NOₓ-N enthalten, weil Denitrifikation innerhalb des Filtermediums 2 nur sehr beschränkt abläuft. Deshalb ist, wie in Fig. 2 dargestellt, vorgesehen, das Reinwasser 7 in vorgeordnete Anlagenabschnitte über Rückführungen 10 rückzuleiten, sodass es insbesondere das vor der Kapazitätserweiterung der Anlage im Belebtschlammverfahren betriebene Becken 11 erneut durchläuft. Da dieses Becken erfindungsgemäß als anoxische Stufe betrieben wird, erfolgt hier nun effiziente Denitrifikation, also die Reduktion von NOₓ-N. Zur Herstellung eines anoxischen Milieus ist es insbesondere notwendig, das Becken nicht mehr oder nur sehr eingeschränkt zu belüften.

Rühren oder sonstige Agitation des Abwassers ist vorsichtig zu gestalten, um übermäßigen Sauerstoffeintrag aus der Umgebungsluft in das Abwasser zu vermeiden. Vorgeordnete Anlagenabschnitte, etwa wie jene in Fig. 2 gezeigten Grobkläreinrichtungen 12 wie Rechen und Sandfang oder ein Becken zur biologischen Phosphatelimination 13 können beibehalten werden. Der vor der Kapazitätserweiterung als Nachklärbecken 14 dienende Anlagenabschnitt kann ohne größere Modifikation als Zwischenklärbecken 14 verwendet werden. Das Zwischenklärbecken 14 weist eine Ableitung für Überschussschlamm 15 auf, die Klärschlamm aus dem Reinigungsprozess entfernt, während der Überschussschlamm aus der Biofiltrationsanlage 16 gemeinsam mit dem Spülabwasser 8 über Rückführungen 17 in vorgeordnete Anlagenabschnitte rückgeleitet wird.

Die Rezirkulationsmengen sowohl von Reinwasser als auch von Spülabwasser werden belastungsorientiert gesteuert (online und spezielle SPS). Je nach Erfordernis erfolgt somit die zusätzliche Reinigung des Abwassers über die Biofiltration und im Falle einer erforderlichen Denitrifikation über belastungsorientierte Rezirkulation aus dem nachgeschalteten Reinwasserbecken.

Durch das System von Biofiltration und Rezirkulation ist somit eine exakte Anpassung an die jeweilige Abwasserbehandlung leicht möglich und garantiert auch optimale Betriebskosten sowie modulare Erweiterungsmöglichkeiten. Die verfahrensbedingte Elastizität in der Betriebsführung, insbesondere der Möglichkeit einer belastungsorientierten Teilstromführung, bedingt dabei auch weitaus höhere Reinigungsleistungen.

Das erfindungsgemäße Verfahren sowie eine Anlage zur Verwirklichung desselben sollen im folgenden anhand eines illustrativen aber nicht einschränkenden Ausführungsbeispiels dargestellt werden. Insbesondere soll gezeigt werden, wie eine fiktive, aber konkrete Aufgabe mit gegenständlicher Erfindung gelöst werden kann.

### Ausführungsbeispiel:

Aufgrund strengerer Richtlinien für kommunale Abwässer und durch weitere Kanalanschlüsse ist eine bestehende Kläranlage mit einem Anschlusswert von 8000 EW₆₀ in ihrer Kapazität zu erhöhen. Die bestehende Kläranlage hat die Verfahrensstufen:
- Mechanische Reinigung
- Vorklärung
- Vorgeschaltete Denitrifikation (212 m³)
- Belebungsbecken (728 m³)
- Nachklärung
- Schlammstabilisierung und Schlammstapelung

Die hydraulische Bemessung soll sich an folgenden Abwassermengen orientieren:

| | | |
|---|---|---|
| Q_{TW} | 64,0 0 l/s | 230 m³/h |
| Q_{MW} | 104,07 l/s | 374 m³/h |

Bei der Schmutzfrachtbemessung kann von einer BSB₅-Fracht von 480 kg/d, einer Tagesfracht von Stickstoff von 96 kg N_{g}/d (Gesamtstickstoff, davon 67,2 kg/d als NH₄-N) und einer Phosphatbelastung von 16 kg P_{g}/d (gesamte Phosphatbelastung) ausgegangen werden.

Die Anforderungen an den Ablauf gemäß wasserrechtlicher Vorschreibungen sind dabei:

| | |
|---|---|
| < 20 mg BSB₅/l | Mindestwirkungsgrad 95% |
| < 75 mg CSB/l | Mindestwirkungsgrad 85% |
| < 5 mg NH₄-N/l | Bei Abwassertemperaturen über 8°C |
| 70% Ng Abbau | Bei Abwassertemperaturen über 12°C |
| 1,0 mg P_{g}/l | |
| <25 mg TOC/l ¹⁾ | Mindestwirkungsgrad 85% |

| | |
|---|---|
| ¹⁾ TOC....."Total organic carbon" | |

Das nachstehende erfindungsgemäße Verfahren sowie die entsprechende Ausbauvariante haben nun den wasserrechtlichen Anforderungen zu entsprechen und werden überdies die Vorgabe erfüllen, den vorhandenen Altbestand soweit als möglich zu nutzen.

Das aus gegenständlicher Erfindung resultierende hydraulische Konzept sieht dabei vor, das bestehende Vorklärbecken in Betrieb zu lassen und einen Teilstrom (bis ca. 108 m³/h) immer über das Vorklärbecken zu führen. Nur die Mehrmengen werden direkt am Vorklärbecken vorbeigeführt und direkt in die Stufe zur biologischen Phosphatelimination ("Bio-P-Stufe") geleitet. Als Bio-P-Stufe wird das vorhandene Denitrifikationsbecken ("Deni-Becken") mit einem Volumen von 212 m³ verwendet. Danach ist die erfindungsgemäße Verfahrenskombination mit vorgeschalteter Denitrifikation im bestehenden Belebungsbecken und Nitrifikation in einer neuen Abwasserbiofiltrationsanlage vorgesehen. Die vorhandene Belüftung kann belassen werden, denn damit wird je nach Abwassertemperatur und Frachtanfall ein Denitrifikationsbetrieb oder ein geregelter Nitrifikationsbetrieb ermöglicht. Weiters können mit der Belüftung in den Denitrifikationsbecken die anoxischen Zonen genau eingestellt werden. Vor der Biofiltration kann zur Sicherheit auch eine Nachfällung mit Eisen-Fällungsmittel zur Phosphatelimination vorgesehen sein. Dadurch werden alle bestehenden Bauteile verwendet und eine sehr kompakte Ausbaulösung der biologischen Stufe verwirklicht.

Im Rahmen dieses Ausführungsbeispiels wird das Abwasserbiofilter zur Kohlenstoff-Ammonium-Entfernung eingesetzt. Die erforderliche Denitrifikation wird durch Abwasserrezirkulation in das vorhandene Belebungsbecken erreicht, die im Denitrifikationsfall als anoxische Belebtschlammstufe betrieben wird.

Bei den oben genannten Abwassermengen im Zulauf ergeben sich im Rahmen dieses Ausführungsbeispiels folgende Abwassermengen im Zulauf zur anoxischen Stufe (mit Rückläufen aus der Biofiltrationsstufe):

| | | |
|---|---|---|
| Q_{TW} | 64,7 l/s | 233,2 m³/h |
| Q_{MW} | 104,78 l/s | 377,2 m³/h |

Das ergibt gemäß eingehender Berechnungen im Zulauf zur anoxischen Stufe eine BSB₅-Fracht von 486 kg/d, eine Belastung mit Stickstoff von 104,7 kg N_{g}/d (davon 74,5 kg/d als NH₄-N) und eine Phosphatbelastung von 17,5 kg P_{g}/d. Hierbei wurde berücksichtigt, dass ein 50%-Teilstrom über die bestehende Vorklärung geführt wird und so eine Reduktion des BSB₅ für diesen Teilstrom von 10% zu berücksichtigen ist. Die Feststoffe für diesen Teilstrom werden im Vorklärbecken zu 90% entfernt.

Diese Werte, insbesondere jene für NOₓ-N, werden bei Durchlaufen von Bio-P-Eliminationsbecken, Deni-Becken und Zwischenklärbecken zwar weiter reduziert, zum Erreichen der oben beschriebenen wasserrechtlichen Vorschreibungen ist nun eine entsprechende Dimensionierung der Biofiltrationsanlage notwendig.

Im Rahmen dieses Ausführungsbeispiels kann das technische Problem über eine Anlage mit 2 Abwasserbiofilter mit je 21 m² Filterfläche und einem Gesamt-Filtervolumen von 168 m³ gelöst werden. Das Prinzip der Anlage ist in Fig. 1 dargestellt. Der Betrieb der Abwasserbiofiltration kann voll automatisch gestaltet werden. So kann etwa das Abwasser-Biofilter über Drucksensoren überwacht werden. Die Rückspülung erfolgt automatisch nach Zeit oder wenn erforderlich über Druck. Der Filter wird vorzugsweise innerhalb von 24-36 Stunden rückgespült. Als Spülwasser wird der Reinwasserablauf des Filters verwendet. Dazu ist ein Reinwasserbecken mit 120 m³ vorgesehen. Aus diesem Becken wird das Filterrückspülwasser entnommen. Das Spülabwasser mit dem biologischen Überschussschlamm wird in ein Pufferbecken/Spülabwasserbecken mit ca. 120 m³ Volumen geleitet. Von diesem Becken wird das Rückspülwasser in den Nachtstunden zum Zulauf der Vorklärung gepumpt.

Das Reinwasser kann etwa gravitätisch über das Reinwasserbecken zu einem Ablaufschacht fließen und von dort zur Ablaufmessstation und über die bestehende Leitung zum Vorfluter. Das zu rezirkulierende Abwasser wird gravitätisch zum Zulauf der anoxischen Denitrifikation geführt und vor dem Eintritt in das Denitrifikationsbecken mit einem Teil des Rücklaufschlammes vermischt. Dadurch erreicht man eine Belüftung des Rücklaufschlammes und verhindert gleichzeitig, dass zu sehr sauerstoffhaltiges Abwasser in die Denitrifikationsstufe gelangt.

Die Verfahrensstufen der Gesamtanlage basierend auf dem erfindungsgemäßen Verfahren sind somit:
- Mechanische Reinigung
- Vorklärung für Abwassermenge bis zu 108 m³/h
- Bio-P-Elimination im bestehenden Deni-Becken mit 212 m³
- Denitrifikation im bestehenden Belebungsbecken mit Zwischenklärung im bestehenden Nachklärbecken
- 2 Stück 21 m² Abwasserbiofilter CN (Nitrifikation) mit einem gesamten Filtervolumen von 168 m³
- Reinwasserbecken mit 120 m³
- Spülabwasserbecken mit 120 m³
- Schlammeindickung und aerobe Schlammstabilisierung in bestehender Schlammstabilisierungsanlage
- Schlammentwässerung

Die Vorteile dieses erfindungsgemäßen, kombinierten Verfahrens von Belebtschlammbiologie und Festbettbiologie ermöglicht die Nutzung der Stärken beider Systeme. Diese Vorteile sind gute Ausgleichsmöglichkeiten und Pufferung, bessere Abbauleistungen bei tieferen Abwassertemperaturen, kompakte Bauform, hohe Betriebssicherheit und sehr flexible Fahrweise der Anlage.

## Patentansprüche

1. Verfahren zur biologischen Reinigung kommunaler, industrieller oder gewerblicher Abwässer, das eine mechanische Vorreinigung, gegebenenfalls eine Vorklärung, gegebenenfalls eine biologische Phosphatelimination, ein Belebungsverfahren, gegebenenfalls eine Nachklärung sowie eine Abwasserbehandlung mithilfe eines mit sessilen Mikroorganismen besiedelten Biofiltermediums umfasst, **dadurch gekennzeichnet, dass** der Abbau organischer Substanzen, Nitrifikation, Filterung von festen Stoffen und gegebenenfalls der Phosphatabbau im wesentlichen in dem mit sessilen Mikroorganismen besiedelten Biofiltermedium (2) stattfinden und Denitrifikation im wesentlichen im vorwiegend anoxisch durchgeführten Belebungsverfahren stattfindet, indem nach dem Durchlaufen des Biofiltermediums eine vorzugsweise belastungsorientierte Rezirkulation des Wassers in jene Verfahrensschritte erfolgt, die dem vorwiegend anoxisch durchgeführten Belebungsverfahren vorangehen.

2. Verfahren nach Anspruch 1, **dadurch gekennzeichnet, dass** mechanische Vorreinigung, gegebenenfalls Vorklärung, gegebenenfalls biologische Phosphatelimination, Belebungsverfahren sowie gegebenenfalls Nachklärung die Verfahrensschritte einer bereits bestehenden und in Betrieb befindlichen Abwasserreinigungsanlage sind und die Abwasserbehandlung mithilfe eines mit sessilen Mikroorganismen besiedelten Biofiltermediums den bestehenden Verfahrensschritten für den hauptsächlichen Abbau organischer Substanzen und gegebenenfalls von Phosphatverbindungen sowie die hauptsächliche Nitrifikation und Filterung von festen Stoffen hinzugefügt wird, das bestehende Belebungsverfahren im wesentlichen anoxisch zur Denitrifikation durchgeführt wird und als zusätzlicher Verfahrensschritt weiters vorzugsweise belastungsorientierte Rezirkulation von Wasser, das das Filtermedium verlässt, in jene Verfahrensschritte erfolgt, die dem vorwiegend anoxisch durchgeführten Belebungsverfahren vorangehen.

3. Verfahren nach Anspruch 1 oder 2, **dadurch gekennzeichnet, dass** der Abbau organischer Substanzen, Nitrifikation, Filterung von festen Stoffen und gegebenenfalls der Phosphatabbau im Biofiltermedium (2) einer Biofiltrationsanlage (16) stattfinden.

4. Anlage zur biologischen Reinigung kommunaler, industrieller oder gewerblicher Abwässer, die mechanische Vorreinigungseinrichtungen (12), gegebenenfalls Vorklärungsbecken, gegebenenfalls Einrichtungen zur biologischen Phosphatelimination (13), ein oder mehrere Becken (11) zur Durchführung des Belebungsverfahrens sowie gegebenenfalls ein Nachklärbecken (14) umfasst, **dadurch gekennzeichnet, dass** ein mit sessilen Mikroorganismen besiedeltes Biofiltermedium (2) einem Nachklärbecken (14) oder direkt dem oder den Becken (11) zur Durchführung des Belebungsverfahrens nachfolgt, und ein Auslass des Biofiltermediums zur vorzugsweise belastungsorientierten Rezirkulation des Wassers mit mindestens einem der vorgeordneten Becken verbunden ist.

5. Anlage nach Anspruch 4, **dadurch gekennzeichnet, dass** die mechanischen Vorreinigungseinrichtungen (12), gegebenenfalls die Vorklärungsbecken, gegebenenfalls die Einrichtungen zur biologischen Phosphatelimination (13), das oder die Becken (11) zur Durchführung des Belebungsverfahrens sowie gegebenenfalls das Nachklärbecken (14) Bestandteile einer bereits bestehenden und in Betrieb befindlichen Anlage sind, und das mit sessilen Mikroorganismen besiedelte Biofiltermedium (2) nachträglich an das Nachklärbecken (14) oder dem oder den Becken (11) zur Durchführung des Belebungsverfahrens angeschlossen wird, und ein Auslass des Biofiltermediums zur Rezirkulation des Wassers mit mindestens einem der vorgeordneten Becken verbunden wird.

6. Anlage nach Anspruch 4 oder 5, **dadurch gekennzeichnet, dass** es sich bei dem mit sessilen Mikroorganismen besiedelten Biofiltermedium (2) um eine Biofiltrationsanlage (16) handelt.

7. Anlage nach einem der Ansprüche 4, 5 oder 6, **dadurch gekennzeichnet, dass** ferner Spülabwasserbecken (5) und Reinwasserbecken (6) vorgesehen sind, über die vorzugsweise belastungsorientierte Rezirkulation von Wasser aus dem Auslass des mit sessilen Mikroorganismen besiedelten Biofiltermediums (2) in vorgeordnete Anlagenabschnitte erfolgt.

8. Anlage nach einem der Ansprüche 4 bis 7, **dadurch gekennzeichnet, dass** über Zuleitungen (9) Wasser aus dem Reinwasserbecken (6) zur Rückspülung des mit sessilen Mikroorganismen besiedelten Filtermediums (2) verwendet werden kann.

9. Anlage nach einem der Ansprüche 4 bis 8, **dadurch gekennzeichnet, dass** das Spülabwasserbecken (5) ferner zur Aufnahme des bei der Rückspülung anfallenden Überschussschlammes vorgesehen ist.
